# FASCICULE DE BREVET EUROPEEN

(11) **EP 3 593 064 B1**
(45) Date de publication et mention de la délivrance du brevet: **02.08.2023**
(21) Numéro de dépôt: 18714845.7
(22) Date de dépôt: 09.03.2018
(51) Int. Cl.: F24S 25/65, B63B 35/44, H02S 20/00, F24S 20/70

(54) **TAPIS SOLAIRE**
SOLARMATTE
SOLAR MAT

(30) Priorité: 10.03.2017 EP 17160424
(43) Date de publication de la demande: 15.01.2020
(73) Titulaire: Romande Energie SA, 1110 Morges (CH)
(72) Inventeur: LANDBØ, Trond, 1325 Lysaker (NO); SEGURA, Virginie, 01460 Port (FR); FUCHS, Guillaume, 1132 Lully (CH)
(74) Mandataire: Weihs, Bruno Konrad
(86) Numéro de dépôt international: PCT/IB2018/051559
(87) Numéro de publication internationale: WO 2018/163121

(56) Documents cités:
- EP-B1- 2 535 259
- WO-A1-2008/125154
- WO-A1-2012/166966
- WO-A1-2015/107293
- FR-A1- 2 968 386
- US-A1- 2007 234 945
- US-A1- 2008 029 148

## Description

### Domaine technique de l'invention

L'invention est dans le domaine des centrales d'énergie solaire gagnée par des surfaces de cellules photovoltaïques disposées au-dessus d'une surface d'eau.

### Art antérieur

Il est connu de déployer un réseau d'éléments photovoltaïques flottants en milieu aquatique. Ce type de déploiement permet notamment de pallier au manque de terrains présentant une surface suffisante et en particulier au coût de ces terrains.

La publication EP 2 535 259 B1 décrit un tel réseau dans lequel des éléments photovoltaïques flottants sont reliés entre eux au moyen d'au moins un câble, chaque élément flottant comprenant une bouée et une surface photovoltaïque fixée dessus. Les surfaces photovoltaïques pivotent autour d'un axe non vertical et les éléments photovoltaïques flottants peuvent se poser sur des éléments d'amarrage fixes installés sur un fond de bassin. Le réseau comporte des éléments de réglage de la longueur des câbles.

Des réalisations de réseau solaire flottant de grandes tailles existent déjà au Japon, en Grande-Bretagne, en France, en Malaisie, etc., mais uniquement dans des régions où le climat est doux. Début 2017 ce ne sont pas moins de 63 MWc (mégawatt-crête) de solaire flottant qui ont été installés dans le monde. La concrétisation d'un projet solaire en milieu alpin promet des performances accrues par rapport aux régions où le climat est doux.

La présente invention propose une alternative de réalisation permettant une pose simplifiée du réseau sur un lac de montagne, ainsi qu'une réalisation globalement plus économique.

### Résumé de l'invention

Dans un premier aspect, l'invention est définie par la revendication 1 et propose un tapis solaire pour installation sur un lac de montagne, comprenant une pluralité d'éléments flottants, chacun des éléments flottants étant configuré pour supporter des charges en flottant sur la surface du lac et résister à des forces provenant au moins d'un autre des éléments flottants ou d'influence environnementale ; un ou plusieurs panneaux photovoltaïques monté(s) sur chacun des éléments de la pluralité d'éléments flottants, au moyen respectivement d'une structure de support configurée pour séparer les panneaux photovoltaïques de la surface de l'eau d'une hauteur prédéterminée, choisie pour éviter le contact avec l'eau et pour que de la neige qui entrerait potentiellement en contact avec un panneau photovoltaïque puisse tomber facilement du panneau pour évacuation sans s'entasser devant les panneaux ; un onduleur et un transformateur ; une structure flottante déterminée pour supporter l'onduleur et le transformateur ; des moyens de liaison articulés reliant les éléments de la pluralité des éléments flottants et la structure flottante déterminée entre eux en matrice afin de constituer le tapis solaire. Les moyens de liaison articulés sont en outre configurés afin que les éléments flottants soient posés au sol du fond du lac en épousant la topographie de celui-ci lorsque le lac est en substance vide d'eau.

Dans un mode de réalisation préféré, la structure de support comprend un cadre supérieur porteur configuré pour rester à tout moment en dehors de l'eau du lac, et pour accueillir et porter le ou les panneaux photovoltaïques.

Dans encore un mode de réalisation préféré, les moyens de liaison articulés sont configurés pour relier les éléments flottants par des attaches sur les cadres supérieurs, permettant ainsi d'éviter toute emprise dans de la glace en cas de gel de l'eau du lac.

Dans encore un mode de réalisation préféré, le cadre supérieur est configuré pour maintenir le ou les panneaux solaires à au moins 1,5 m au-dessus de l'élément flottant.

Dans encore un mode de réalisation préféré, le cadre supérieur comprend une structure en aluminium.

Selon l'invention, les moyens de liaison comprennent des câbles principaux, des câbles secondaires et des bouées intermédiaires, les câbles secondaires étant configurés pour maintenir les éléments flottants et la structure flottante déterminée dans leurs positions relatives entre eux, les câbles principaux étant configurés pour soutenir les câbles secondaires et fixer le tapis solaire à des moyens d'ancrage situés en substance sur le bord du lac, les bouées intermédiaires étant configurées pour soutenir les câbles principaux et les maintenir au-dessus de la surface de l'eau.

Dans encore un mode de réalisation préféré, les bouées intermédiaires sont situées en zone périphérique du tapis solaire.

Dans encore un mode de réalisation préféré, chacun des éléments flottants comprend une structure constituée par au moins l'une des matières de la liste comprenant l'acier, le polyéthylène, l'aluminium.

Dans encore un mode de réalisation préféré, chacun des éléments flottants comprend une structure creuse, cette structure creuse étant vide.

Dans encore un mode de réalisation préféré, la structure creuse est remplie d'une mousse arrangée pour éviter que l'élément flottant se remplisse d'eau en cas d'une brèche dans la structure creuse.

Dans encore un mode de réalisation préféré, chaque élément flottant comprend un flotteur fait en une pièce ou par une pluralité de pièces, et décrivant une forme de circonférence d'octogone.

Dans encore un mode de réalisation préféré, le tapis solaire comprend en outre des moyens d'ancrage configurés pour attacher un ou plusieurs éléments flottants sur le bord du lac.

Dans encore un mode de réalisation préféré, au moins un des moyens de liaison comporte une chaine, la chaine ayant une masse déterminée.

Dans un deuxième aspect, l'invention propose un procédé d'installation d'un tapis solaire sur un lac de montagne selon l'un des modes de réalisation décrits ci-dessus. Le processus comprend une dépose d'au moins une base d'ancrage au sol pour le tapis solaire, à un endroit correspondant au bord du lac lorsque le lac est rempli à un niveau de 2/3 du niveau maximum ; un montage pour chaque base d'ancrage d'un câble attaché à une de ses extrémités à la base d'ancrage et l'extrémité opposée prévue pour être attachée à une élément flottant du tapis solaire, le câble ayant une longueur configurée d'une part pour assurer au moins un maintien dans une première position déterminée du tapis solaire lorsque un niveau d'eau du lac est au minimum, et d'autre part assurer un maintien dans une deuxième position déterminée du tapis solaire lorsque le niveau d'eau du lac est maximum, le câble étant alors en extension ; et pour chaque câble, et lorsque le niveau d'eau du lac est sensiblement supérieur au niveau minimum, attacher un élément flottant au câble.

Dans encore un mode de réalisation préféré, préalablement à l'étape de dépose, le sol du lac est au sec ou est asséché.

### Brève description des figures

L'invention sera mieux comprise au vu de la description détaillée de modes de réalisation préférés de l'invention et en référence aux dessins, dans lesquels
figure 1 contient un assemblage de trois tapis de 81 flotteurs disposés dans un site naturel selon un exemple de réalisation préféré de l'invention ;
figures 2A à 2D illustrent schématiquement et respectivement des flotteurs ou éléments flottants selon plusieurs exemples de réalisations préférées de l'invention ;
figure 3 montre deux exemples de plans de tapis de flotteurs : l'exemple A s'entend sans effet du vent, l'exemple B avec effet du vent ;
figure 4 illustre la position d'un tapis de flotteurs en fonction du niveau d'eau d'un lac sur lequel le tapis est disposé ;
figure 5 illustre une bouée de flotteur dans deux cas de figure de flottaison ;
figure 6 illustre un exemple de réalisation du tapis solaire avec des moyens de liaison comprenant des câbles principaux, des câbles secondaires et des bouées intermédiaires selon l'invention ;
figure 7 illustre un exemple d'élément flottant portant des panneaux photovoltaïques ; et
figure 8 illustre un exemple de structure flottante déterminée pour supporter un onduleur et un transformateur dans un tapis solaire selon l'invention.

Les références utilisées pour désigner des structures dans les figures seront les mêmes d'une figure à l'autre si la structure concernée est la même ou de même nature.

### Description détaillée de modes de réalisation préférés de l'invention

L'invention est relative à un tapis solaire flottant pour installation sur un lac de montagne, et à un procédé d'installation d'un tel tapis solaire flottant sur le lac de montagne. Le tapis flottant est conçu pour résister aux contraintes d'un lac de montagne en milieu alpin - vent, neige, épaisseur de glace à la surface du lac en hiver notamment, importantes variations du niveau d'eau en cas d'un lac de barrage, importantes variations de températures... Le tapis solaire comprend un nombre d'élément flottants qui peuvent se poser au sol lorsque le lac est vide.

### Introduction

L'énergie photovoltaïque est appelée à contribuer à l'objectif de production d'électricité et de chaleur visée dans le cadre de stratégies énergétiques visant à augmenter les parts de production d'énergie renouvelable.

En outre l'énergie photovoltaïque contribue à une réduction des émissions annuelles de CO₂ :
- la production d'un kilowattheure d'électricité solaire en Suisse émet typiquement 42 g d'équivalents de CO₂. Ces chiffres prennent en compte la fabrication et l'élimination du système photovoltaïque entier ;
- à titre de comparaison, une centrale à gaz affiche des émissions de près de 452 g, tandis qu'une centrale à lignite en génère même 1347 g. Le mix électrique européen émet 552 g d'équivalents CO₂ par kilowattheure (Source : ESU Services 2013 : Life Cycle Inventories of Electrical Mixes and Grid (PDF)) ;
- l'électricité solaire génère donc quasiment 13 fois moins d'émissions de gaz à effet de serre que le mix électrique européen et apporte une contribution importante à la protection du climat.

Un exemple de projet de tapis flottant est en cours de réalisation en Suisse, au Barrage des Toules, et vise à une puissance de 420 kWc (capacité d'installer 1400 panneaux PV d'une dimension de 1600 mm x 1000 mm). Le Barrage se trouve en milieu alpin, ce qui confère notamment les avantages suivants pour le projet :
- *Augmentation de la production d'énergie et donc de la rentabilité du projet.* Les tests menés sur place durant quatre ans grâce à une installation pilote ont permis de montrer que la technologie photovoltaïque bifaciale permet une production de 50% plus importante par rapport à une production d'un panneau PV monofacial en plaine. Avec la technologie bifaciale, le productible solaire au lac des Toules est proche de celle du sud de l'Espagne ou du nord du Maroc avec une technologie photovoltaïque non-bifaciale. En altitude la production photovoltaïque est plus importante en comparaison à la plaine, grâce aux phénomènes suivants :
   - l'index UV est plus important ;
   - les effets d'Albedo (réflexion du soleil sur une surface) de la neige, de la glace et de l'eau sont plus élevés que ceux d'une toiture ou de l'herbe ; et
   - les températures sont plus froides.
- *Production continue et importante tout au long de l'année.* La production hivernale (d'octobre à mars inclus) atteint, voire dépasse les 40% de la production annuelle pour la technologie photovoltaïque bifaciale. Il est également important de noter que la production mensuelle est quasi constante du mois de mars au mois de septembre inclus. Ceci est principalement dû à la réflexion de la neige lors des mois où les jours sont plus courts.
- *Limitation des impacts sur l'environnement.* Ceci est vérifié en particulier pour le Lac des Toules, en raison de l'état artificiel de ce lac de barrage - ceci peut être vrai aussi pour d'autres lacs de barrage :
   - les fluctuations du niveau des eaux ne permettent pas le développement d'une végétation riveraine de valeur ni l'installation d'espèces faunistiques ou floristiques particulières ;
   - la turbidité du lac et sa basse température freinent naturellement le développement du zoo et phytoplancton, d'où un impact limité sur la faune piscicole ;
   - l'aspect paysager du site est peu naturel ;
   - les installations de chantier et le raccordement électrique peuvent être réalisés sans impacts particuliers sur l'environnement ; et
   - l'installation est posée au sol en moyenne durant 6 mois par année (entre janvier et juin).
- *Facilité de distribution de l'énergie produite* en profitant des installations existantes liées au barrage.
- *Cohérence territoriale* au niveau des activités déjà présentes sur le site. Le lac joue déjà un rôle hydroélectrique et devient avec le tapix solaire un centre unique de production multi-énergie (hydroélectrique et photovoltaïque), avec des avantages en termes de :
   - complémentarité des énergies renouvelables ;
   - impacts environnementaux concentrés dans une zone ; et
   - synergie au niveau du raccordement au réseau électrique.

Pour tout tapis solaire à poser sur un lac de barrage, le raccordement du système flottant peut se faire au réseau de distribution existant au niveau du barrage.

Un exemple des conditions environnementales auxquelles un tapis flottant pour lac de montagne peut être soumis, est donné par les paramètre du Lac des Toules :
- températures : de -25°C à +30°C ;
- épaisseur de la neige sur les panneaux PV avant son évacuation : 50 cm
- épaisseur maximum de la glace du lac : env. 60 cm
- vitesse du vent : rafales jusqu'à 120 km/h
- variation du niveau du lac : 62 m au maximum sur les 10 dernières années.

### Description générale

Le principe de base de l'invention est d'avoir, pour un lac de montagne, une multitude d'éléments flottants porteurs de panneaux photovoltaïques qui seront reliés entre eux afin de créer un tapis solaire. Dans un exemple de réalisation qui serait proche de celui du lac des Toules évoqué ci-dessus, chaque élément flotteur reçoit 40 panneaux photovoltaïques de 1,6 m² de surface chacun.

Un lac de montagne, outre les conditions environnementales déjà évoquées, se caractérise en général aussi par un fond avec une topographie plutôt irrégulière comportant éventuellement des rochers et/ou des trous. Le fond peut en outre être constitué par deux versants de montagnes qui forment en même temps les bords du lac de montage. Il peut le cas échéant être nécessaire d'aménager le fond du lac en le rendant plus plan, ce qui pourrait être fait par des travaux de préférence lorsque le lac est asséché. Le caractère plutôt plan du fond permettrait de faciliter que les éléments flottants se posent dessus sans se renverser lorsque le lac se vide de son eau. Le caractère plan du fond n'implique aucunement que le fond soit sans pente.

Un autre aspect spécifique de l'invention est qu'au moins un élément du tapis flottant est conçu pour supporter en flottaison un ou plusieurs onduleurs et un ou plusieurs transformateurs pour faire un premier traitement du courant produit par les panneaux photovoltaïques. En vue du poids et de la densité spécifique de la charge à faire flotter, cela requiert une structure flottante déterminée qui peut différer des éléments flottants précités.

L'ancrage du tapis solaire se fait sur les bords du lac, à 2/3 du niveau maximum de l'eau du lac, et non sur le fond du lac par opposition à certains systèmes de l'art antérieur.

### Tapis solaire

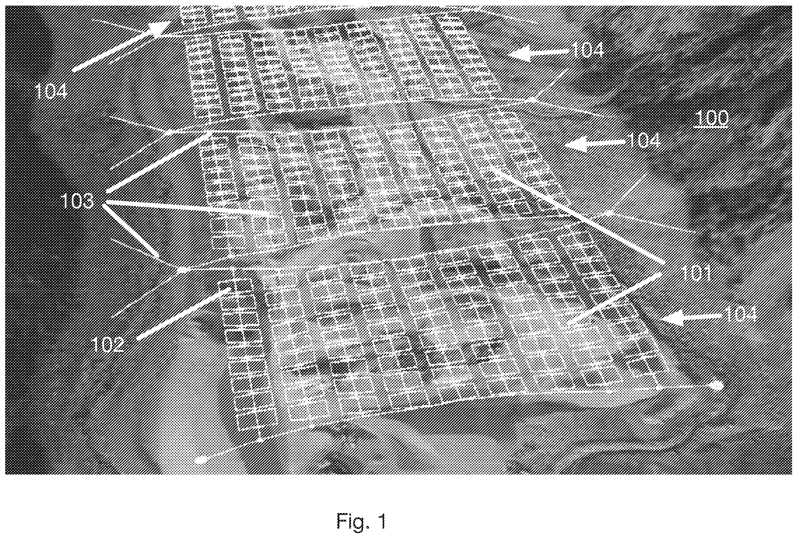

L'invention propose par exemple un tapis solaire 100 pour installation sur un lac de montagne tel que celui illustré la figure 1.

Le tapis solaire 100 comprend une pluralité d'élément flottants 101 et un ou plusieurs panneaux photovoltaïques (non-explicitement illustrés dans figure 1) monté(s) sur chacun de la pluralité des éléments flottants 101.

Le tapis solaire 100 comprend en outre un onduleur et un transformateur (non-explicitement illustrés dans figure 1) montés sur une structure flottante déterminée 102.

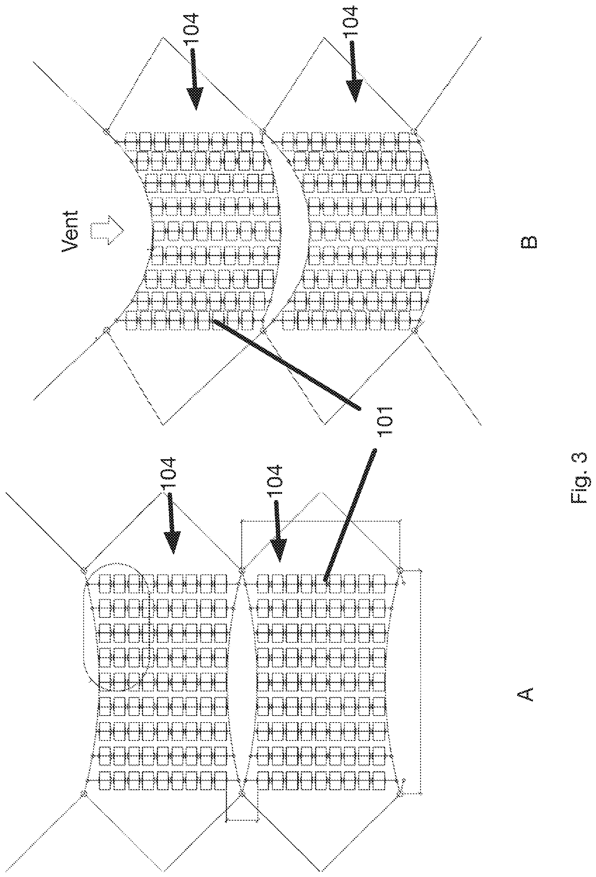

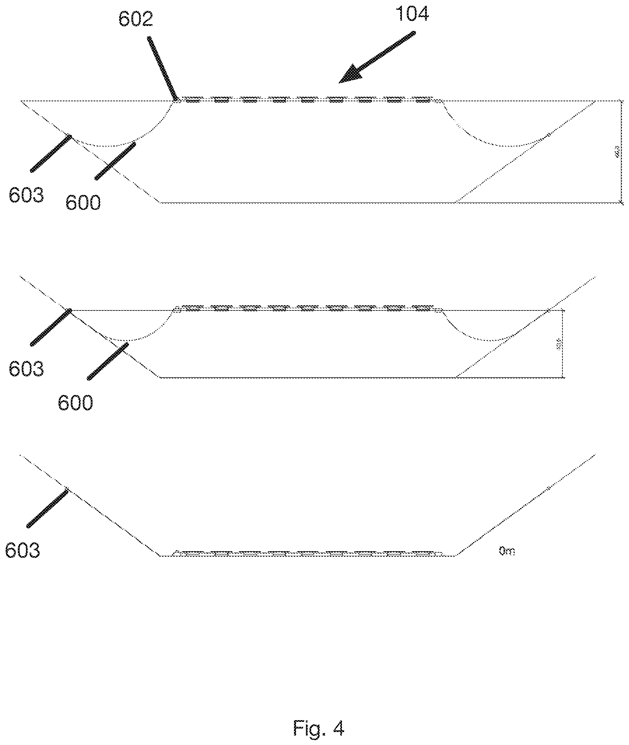

Les éléments flottants 101 de la pluralité des éléments flottants et la structure flottante déterminée 102 sont reliés entre eux en au moins une matrice 104 par des moyens de liaison articulés 103. Dans l'exemple illustré à la figure 1, 4 matrices 104 sont visibles en entier ou en partie. Le nombre de matrices 104 peut être ajusté en fonction par exemple de la taille du lac. L'organisation par matrices 104 restreintes d'éléments flottants 101 sert également l'objectif de mieux résister au vent, et pour faciliter l'entretien grâce à un meilleur accès aux éléments flottants une fois installés. L'effet de résistance au vent est illustré à la figure 3 qui montre deux exemples de plans de tapis de flotteurs, dans lequel l'exemple A s'entend sans effet du vent, l'exemple B avec effet du vent. Il est bien visible que dans l'exemple B malgré la déformation des matrices 104 d'un rectangle dans l'exemple A à une figure avec des bords courbés dans l'exemple B, les éléments flottants 101 restent positionnés en matrice, et son bien séparés d'un élément à un autre.

Les moyens de liaison articulés 103 sont configurés afin que les éléments flottants 101 soient posés au sol du fond du lac en épousant la topographie de celui-ci (non représenté dans la figure 1 lorsque le lac est en substance vide d'eau. Ceci vaut bien évidemment aussi pour la structure flottante déterminée 102, et sera discuté lors de l'explication de la figure 4 plus loin au long de la description.

Chacun des éléments flottants 101 est configuré pour supporter des charges en flottant sur la surface du lac (non représenté dans la figure 1) et résister à des forces (non représentées dans la figure 1) provenant au moins d'un autre des éléments flottants ou d'influence environnementale (non représentée dans la figure 1). La résistance est d'une part assurée par la construction en soi des éléments flottants 101, mais aussi par les moyens de liaison articulés 103 qui permettent de maintenir d'une part les éléments flottants 101 et la structure flottante déterminée 102 à des distances minimales lorsque le vent ou la pente du fond de lac (non représentée dans la figure 1) imposent des mouvements relatifs entre ceux-ci.

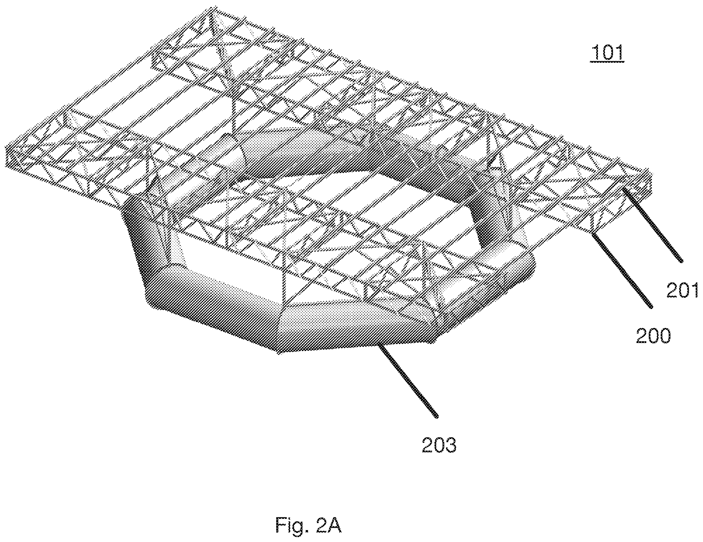

La figure 2A illustre un exemple d'élément flottant 101 configuré pour supporter des charges en flottant.

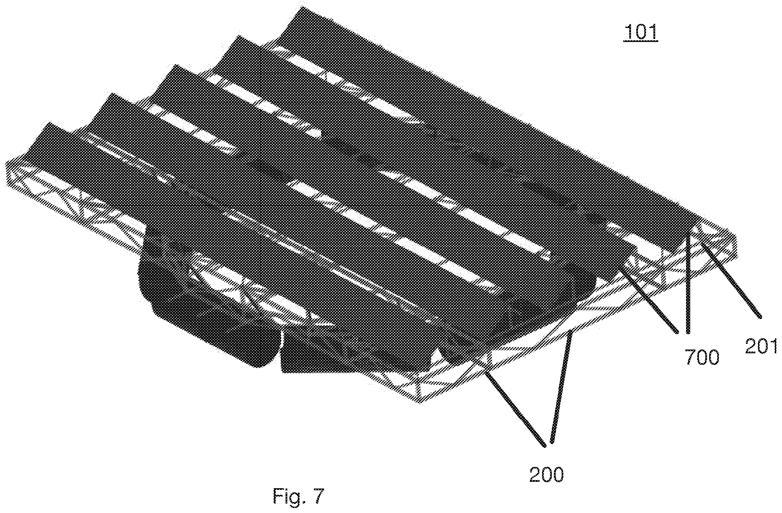

Chaque élément flottant 101 est dimensionné pour supporter un ou plusieurs panneaux photovoltaïques 700 monté(s) sur lui, comme illustré dans l'exemple de la figure 7.

Les panneaux photovoltaïques 700 sont montés sur l'élément flottant 101 au moyen d'une structure de support 200 configurée pour séparer les panneaux photovoltaïques 700 de la surface de l'eau (non représentée dans la figure 7 ou la figure 2A) d'une hauteur prédéterminée lorsque l'élément flottant flotte sur l'eau. Cette hauteur prédéterminée est choisie pour éviter le contact avec l'eau et pour que de la neige qui entrerait potentiellement en contact avec un panneau photovoltaïque lors d'une période de précipitations par exemple, puisse tomber facilement du panneau pour évacuation sans s'entasser devant les panneaux en les cachant. Un Homme du métier comprendra aisément que cette hauteur doit être adaptée aux conditions climatiques d'enneigement du lieu. La structure de support 200 illustrée à la figure 2A comporte un nombre de barres montée entre-elles de manière connue. D'autres structures de support sont envisageables avec des géométries adaptées.

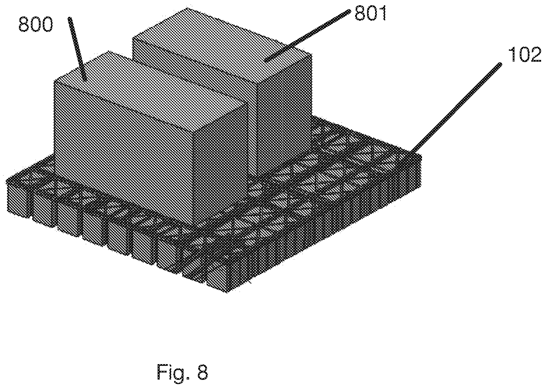

Revenant à la figure 1 et à la figure 8, le tapis solaire comprend en outre l'onduleur et le transformateur déjà évoquées ci-dessus et représentés dans la figure 8 avec les références 800 et 801 respectivement. Ceux-ci sont supportés par la structure flottante déterminée 102, dont un exemple de réalisation est illustré à la figure 8.

### Structure de support

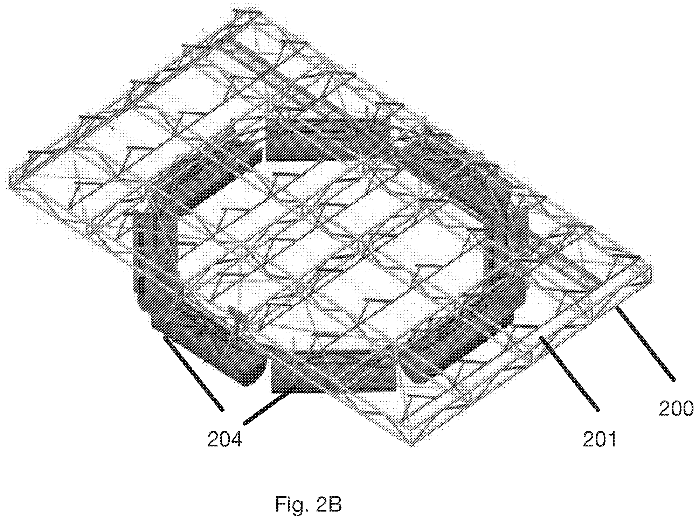

Dans un mode de réalisation préféré du tapis solaire selon l'invention, la structure de support 200 comprend un cadre supérieur porteur 201 configuré pour rester à tout moment en dehors de l'eau du lac, et pour accueillir et porter le ou les panneaux photovoltaïques (non illustré dans les figures 2A et 2B). Un tel cadre supérieur 201 est illustré par exemple à la figure 2A ou à la figure 2B, mais aussi à la figure 7 avec des panneaux photovoltaïques montés sur le cadre. Le cadre supérieur est une structure de barres fixées entre-elles pour obtenir un cadre léger et solide, de hauteur suffisante pour que le haut du cadre supérieur soit toujours en dehors de l'eau du lac.

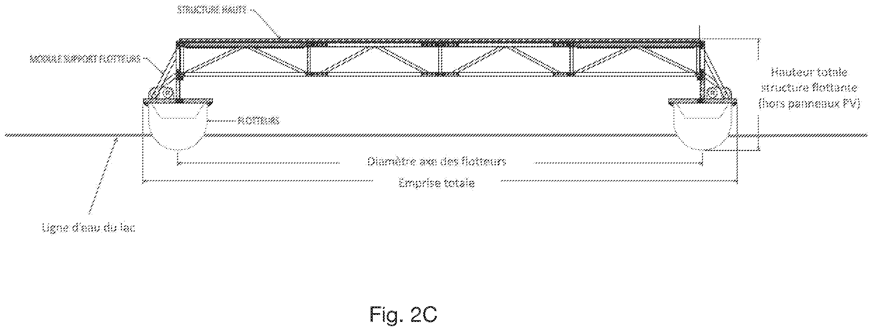

La figure 2C illustre une coupe transversale d'un élément flottant, reposant à la surface de l'eau. La référence "Structure Haute" correspond au cadre supérieur 201 déjà introduit plus haut.

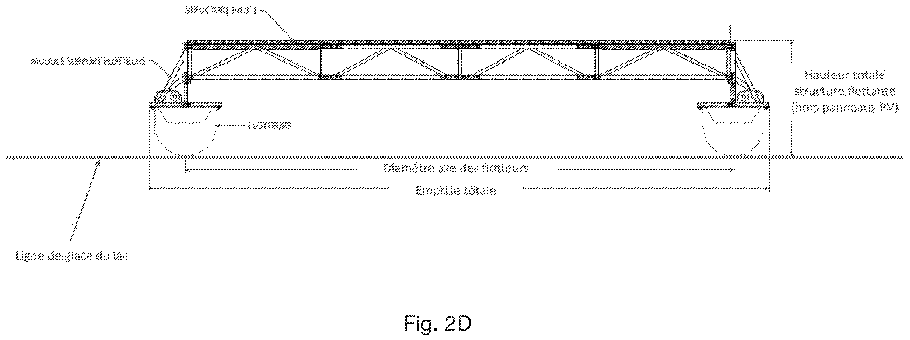

Dans un autre mode de réalisation préféré du tapis solaire selon l'invention, les moyens de liaison articulés sont configurés pour relier les éléments flottants par des attaches sur les cadres supérieurs, permettant ainsi d'éviter toute emprise dans de la glace en cas de gel de l'eau du lac. Concrètement, et en référence à la figure 2C, ces attaches seraient positionnées sur les bords de la Structure Haute. La figure 2D illustre une coupe transversale de l'élément flottant de la figure 2C, sauf qu'ici l'élément flottant repose sur la glace. Il est bien montré que les flotteurs sont remontés à la surface de la glace au lieu d'être pris dans la glace. En même temps, on comprend qu'un moyen articulé qui aurait été attaché à la structure haute par des attaches positionnées sur les bords de la Structure Haute (attaches et moyens de liaison non illustrés dans les figures 2C et 2D) ne serait pas non plus pris dans la glace en raison justement de la position élevée par rapport à la glace.

Dans un autre mode de réalisation préféré du tapis solaire selon l'invention, le cadre supérieur est configuré pour maintenir le ou les panneaux solaires à au moins 1,5 m au-dessus de l'élément flottant.

Dans un autre mode de réalisation préféré du tapis solaire selon l'invention, le cadre supérieur comprend une structure en aluminium. Ce métal apporte un bon compromis en rigidité et poids. D'autres matériaux non nommés ici sont également envisageable et sélectionnable par l'Homme du métier.

### Les moyens de liaison

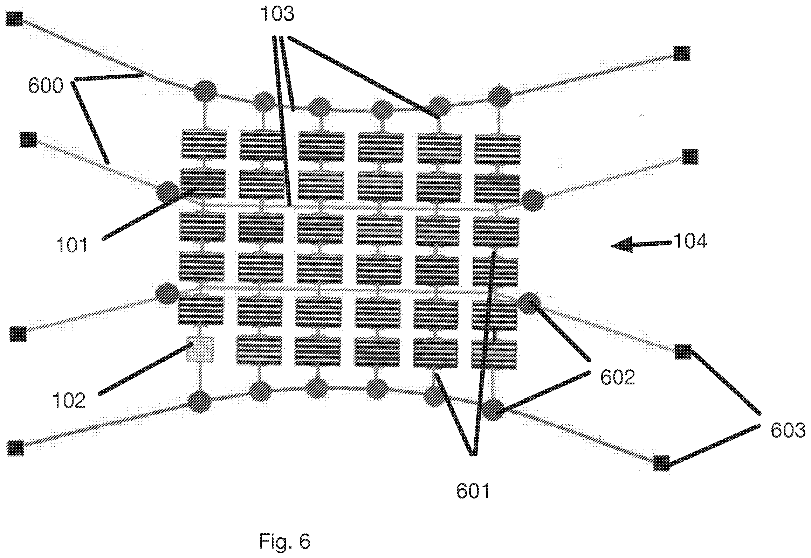

Selon l'invention, et illustré dans la figure 6, les moyens de liaison 103 comprennent
- des câbles principaux 600,
- des câbles secondaires 601 et
- des bouées intermédiaires 602.

Les câbles secondaires 601 sont configurés pour maintenir les éléments flottants 101 et la structure flottante déterminée 102 dans leurs positions relatives entre eux.

Les câbles principaux 600 sont configurés pour soutenir les câbles secondaires 601 et fixer le tapis solaire 104 à des moyens d'ancrage 603 situés en substance sur le bord du lac (bord et lac non représentés dans la figure 6).

Les bouées intermédiaires 602 sont configurées pour soutenir les câbles principaux 600 et les maintenir au-dessus de la surface de l'eau (surface de l'eau non représentée dans la figure 6).

Par conséquent, le tapis solaire 104 est relié par câbles aux bouées intermédiaires 602, qui elles-mêmes sont ancrées aux bords du bassin à l'aide des câbles principaux 600.

Dans une mode de réalisation préféré, les câbles principaux 600 ont une masse qui se manifeste tel qu'illustré à la figure 4, où la situation du tapis solaire est montrée pour 3 niveaux d'eau du lac de montagne.

De préférence, les points d'ancrage 603 sur les bords du lac se situent en substance aux deux-tiers hauts de la hauteur maximale du lac à l'emplacement de l'ancrage.

Dans la figure 4, il est bien visible que quel que soit le niveau de remplissement du lac, c'est-à-dire niveau plein pour l'illustration du dessus, niveau rempli aux deux tiers pour l'illustration du milieu, et niveau vide pour l'illustration du bas, les câbles principaux 600 maintiennent le tapis solaire 104 en place relativement au sol. Ceci est notamment dû à la masse des câbles qui dans ce cas est équivalente à gauche et à droite du tapis pour maintenir une force constante vers le bord du lac de part et d'autre du tapis.

De préférence, les bouées intermédiaires 602 sont situées en zone périphérique du tapis solaire.

En dehors du mode de réalisation de la figure 4, il est indiqué pour un autre mode de réalisation que le poids du câble ne joue par un rôle dans le positionnement du tapis solaire - le positionnement se fait plutôt par le choix d'une longueur adaptée des câbles.

### Les éléments flottants

Les figures 2A et 2B illustrent deux modes de réalisation des éléments flottants : dans la figure 2A une bouée de forme octogonale 203 constitue un élément de flottaison alors que dans la figure 2B il est montré d'avoir 8 éléments de flottaison cylindriques 204 disposés en forme d'octogone. Le mode de réalisation de la figure 2B a l'avantage que la fabrication d'éléments séparés de forme cylindrique est plus facile que la fabrication d'un élément octogonal. De plus le transport des éléments cylindriques s'avère aussi plus facile que celui de la forme octogonale. Les formes cylindriques individuelles peuvent être assemblées sous la structure de support sur le lieu de la surface d'eau et produisent in fine un effet de flottaison comparable à celui obtenu avec l'élément octogonal d'une seule pièce.

Dans un mode de réalisation préféré, chacun des éléments flottants, cylindrique ou octogonal, comprend une structure creuse, cette structure creuse étant vide.

Dans encore un autre mode de réalisation, la structure creuse est remplie d'une mousse arrangée pour éviter que l'élément flottant se remplisse d'eau en cas d'une brèche dans la structure creuse.

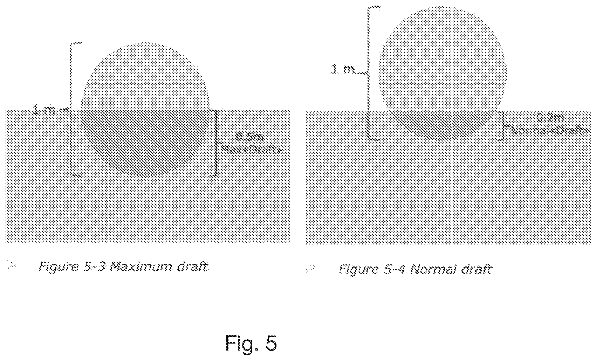

La figure 5 illustre un exemple de flotteur en vue de section dans deux situations de flottaison.

Cette figure démontre le tirant d'eau normal de la structure flottante lorsque celle-ci flotte dans le lac. Le tirant d'eau maximum admissible est également représenté. Celui-ci ne doit jamais être dépassé sous risque que la structure flottante coule ou soit prise dans la glace. Les contraintes et charges externes ont été prises en compte afin que cela ne se produise pas.

### Installation et montage

Pour l'installation et le montage d'une structure de tapis solaire flottante, il convient de procéder comme décrit ci-dessous.
1. Travaux de génie civil nécessaires :
   a. Planie du fond du lac où la structure flottante sera installée;
   b. Réalisation de deux zones logistiques : La première pour le déchargement des éléments venant par camion des usines et le montage final de chaque élément flottant. La deuxième quant à elle sera réservée à la mise à l'eau de chaque élément flottant;
   c. Une route d'accès entre ces deux zones logistiques sera également réalisée (si possible consolidation d'une route existante);
   d. Des petites places de chantier provisoires seront également réalisées à proximité des massifs d'ancrages;
   e. Réalisation des ancrages;
   f. Fouilles nécessaires au raccordement électrique au réseau.
   Tous ces travaux de génie civil sont à réaliser prioritairement. Les points a- et e- sont à réaliser lorsque le niveau du lac est bas.
2. Montage de chaque élément flottant à terre avec tous les panneaux photovoltaïques également;
3. Installation des bouées externes et tirage de câbles entre les ancrages et les bouées afin de « tisser la toile externe », à faire lorsque le niveau d'eau atteint le niveau des ancrages;
4. Transport un à un des éléments flottants entre les deux zones logistiques;
5. Mise à l'eau progressive de tous ces éléments flottants lorsque le niveau d'eau est haut, par grue;
6. Mise en « tapis » de tous ces éléments flottants,
7. Mise à l'eau de la structure flottante avec l'onduleur et le transformateur et intégration de celle-ci au tapis;
8. Connexion électrique des éléments flottants entre eux jusqu'à l'onduleur;
9. Connexion électrique entre l'onduleur et le transformateur puis raccordement au réseau électrique
10. Remise en état des surfaces logistiques provisoires crées.

Ainsi, selon un autre aspect, l'invention propose un procédé d'installation d'un tapis solaire sur un lac de montagne. Ce procédé prévoit une dépose d'au moins une base d'ancrage au sol pour le tapis solaire, à un endroit correspondant au bord du lac lorsque le lac est rempli en substance à deux tiers du niveau maximum. Il prévoit ensuite un montage pour chaque base d'ancrage d'un câble attachée à une de ses extrémités à la base d'ancrage et l'extrémité opposée prévue pour être attachée à un élément flottant du tapis solaire. Le câble a une longueur configurée d'une part pour assurer au moins un maintien dans une première position déterminée du tapis solaire lorsqu'un niveau d'eau du lac est au minimum, et d'autre part assurer un maintien dans une deuxième position déterminée du tapis solaire lorsque le niveau d'eau du lac est maximum, le câble étant alors en extension. Pour chaque câble, et lorsque le niveau d'eau du lac est sensiblement supérieur au niveau minimum, il est prévu d'attacher un élément flottant au câble.
De préférence, préalablement à l'étape de dépose, le sol du lac est au sec ou est asséché.

### Quelques avantages

Parmi les nombreux avantages inhérents à l'invention, les avantages suivants sont mis en avant.

Le tapis solaire selon l'invention permet d'éviter tout système d'amarrage impliquant un ou plusieurs éléments d'attache au fond du lac de montage ou des moyens d'arrimage des éléments flottants aux éléments d'attache au fond du lac, et est donc notamment plus simple et plus économique à mettre en place sur le lac de montagne. Le tapis solaire selon l'invention évite en outre aussi tout système d'ajustement comme des organes de réglage de la longueur du câble, ce qui rend le système moins sujet à des pannes, mais aussi plus économique à réaliser.

## Revendications

1. Un tapis solaire (100) pour installation sur un lac de montagne, comprenant
une pluralité d'éléments flottants (101), chacun des éléments flottants (101) étant configuré pour supporter des charges en flottant sur la surface du lac et résister à des forces provenant au moins d'un autre des éléments flottants (101) ou d'influence environnementale;
un ou plusieurs panneaux photovoltaïques monté(s) sur chacun des éléments de la pluralité d'éléments flottants (101), au moyen respectivement d'une structure de support (200) configurée pour séparer les panneaux photovoltaïques de la surface de l'eau d'une hauteur prédéterminée, choisie pour éviter le contact avec l'eau et pour que de la neige qui entrerait potentiellement en contact avec un panneau photovoltaïque puisse tomber facilement du panneau pour évacuation sans s'entasser devant les panneaux;
un onduleur et un transformateur ;
une structure flottante déterminée (102) pour supporter l'onduleur et le transformateur ;
des moyens de liaison articulés (103) reliant les éléments de la pluralité des éléments flottants (101) et la structure flottante déterminée (102) entre eux en matrice (104) afin de constituer le tapis solaire (100); et
des moyens d'ancrage (603);
les moyens de liaison articulés comprenant des câbles principaux (600), des câbles secondaires (601) et des bouées intermédiaires (602) ;
les câbles secondaires (601) étant configurés pour maintenir les éléments flottants (101) et la structure flottante déterminée (102) dans leurs positions relatives entre eux ;
les câbles principaux (600) étant configurés pour soutenir les câbles secondaires (601) et fixer le tapis solaire (100) à des moyens d'ancrage (603) situés en substance sur le bord du lac ;
les bouées intermédiaires (602) étant configurées pour soutenir les câbles principaux (600) et les maintenir au-dessus de la surface de l'eau ;
les moyens de liaison articulés (103) étant en outre configurés afin que les éléments flottants (101) soient posés au sol du fond du lac en épousant la topographie de celui-ci lorsque le lac est en substance vide d'eau ;
le tapis solaire (100) étant en outre relié aux bouées intermédiaires (602) par les câbles secondaires (601), les bouées intermédiaires (602) étant reliées aux moyens d'ancrage (603) par les câbles principaux (600).

2. Le tapis solaire (100) de la revendication 1, dans lequel la structure de support (200) comprend un cadre supérieur (201) porteur pour maintenir le ou les panneaux photovoltaïques à au moins 1,5 m au-dessus de l'élément flottant (101), le cadre supérieur porteur (201) étant configuré pour rester à tout moment en dehors de l'eau du lac.

3. Le tapis solaire (100) de la revendication 2, dans lequel les moyens de liaison articulés (103) sont configurés pour relier les éléments flottants (101) par des attaches sur les cadres supérieurs, permettant ainsi d'éviter toute emprise dans de la glace en cas de gel de l'eau du lac.

4. Le tapis solaire (100) de la revendication 2, dans lequel le cadre supérieur (201) comprend une structure en aluminium.

5. Le tapis solaire (100) de la revendication 1, dans lequel les bouées intermédiaires (602) sont situées en zone périphérique du tapis solaire (100).

6. Le tapis solaire (100) de la revendication 1, dans lequel chacun des éléments flottants (101) comprend une structure constituée par au moins l'une des matières de la liste comprenant l'acier, le polyéthylène, l'aluminium.

7. Le tapis solaire (100) de la revendication 1, dans lequel chacun des éléments flottants (101) comprend une structure creuse, cette structure creuse étant vide.

8. Le tapis solaire (100) de la revendication 7, dans lequel la structure creuse est remplie d'une mousse arrangée pour éviter que l'élément flottant (101) se remplisse d'eau en cas d'une brèche dans la structure creuse.

9. Le tapis solaire (100) d'une des revendications 1, 7 et 8, dans lequel chaque élément flottant (101) comprend un flotteur fait en une pièce ou par une pluralité de pièces, et décrivant une forme de circonférence d'octogone (203).

10. Le tapis solaire (100) de la revendication 1, comprenant en outre des moyens d'ancrage (603) configurés pour attacher un ou plusieurs éléments flottants (101) sur le bord du lac.

11. Le tapis solaire (100) de la revendication 1, dans lequel au moins un des moyens de liaison comporte une chaine, la chaine ayant une masse déterminée.

12. Un procédé d'installation d'un tapis solaire (100) sur un lac de montagne selon l'une des revendications 1 à 11, comprenant :
une dépose d'au moins une base d'ancrage au sol pour le tapis solaire (100), à un endroit correspondant au bord du lac lorsque le lac est rempli à un niveau de 2/3 du niveau maximum ;
un montage pour chaque base d'ancrage d'un câble attaché à une de ses extrémités à la base d'ancrage et l'extrémité opposée prévue pour être attachée à une élément flottant (101) du tapis solaire (100), le câble ayant une longueur configurée d'une part pour assurer au moins un maintien dans une première position déterminée du tapis solaire (100) lorsque un niveau d'eau du lac est au minimum, et d'autre part assurer un maintien dans une deuxième position déterminée du tapis solaire (100) lorsque le niveau d'eau du lac est maximum, le câble étant alors en extension ;
pour chaque câble, et lorsque le niveau d'eau du lac est sensiblement supérieur au niveau minimum, attacher un élément flottant (101) à la chaine.

13. Le procédé d'installation de la revendication 12, dans lequel, préalablement à l'étape de dépose, le sol du lac est au sec ou est asséché.

## Patentansprüche

1. Solarmatte (100) zur Installation auf einem Bergsee, umfassend
mehrere schwimmende Elemente (101), wobei jedes der schwimmenden Elemente (101) dazu konfiguriert ist, Lasten zu tragen, indem es auf der Seeoberfläche schwimmt, und Kräften zu widerstehen, die von mindestens einem anderen der schwimmenden Elemente (101) oder von Umwelteinflüssen ausgehen;
eine oder mehrere Photovoltaikplatten, die auf jedem der mehreren schwimmenden Elemente (101) jeweils mit Hilfe einer Tragstruktur (200) montiert sind, die dazu konfiguriert ist, die Photovoltaikplatten von der Wasseroberfläche um eine vorbestimmte Höhe zu trennen, die so gewählt ist, dass der Kontakt mit dem Wasser vermieden wird und dass Schnee, der potentiell mit einer Photovoltaikplatte in Kontakt kommen würde, für den Abtransport leicht von der Platte abfallen kann, ohne sich vor den Platten anzuhäufen;
einen Wechselrichter und einen Transformator;
eine bestimmte schwimmende Struktur (102) zum Tragen des Wechselrichters und des Transformators;
gelenkige Verbindungsmittel (103), die die Elemente der mehreren schwimmenden Elemente (101) und die bestimmte schwimmende Struktur (102) miteinander zu einer Matrix (104) verbinden, um die Solarmatte (100) zu bilden; und
Verankerungsmittel (603);
wobei die gelenkigen Verbindungsmittel primäre Seile (600), sekundäre Seile (601) und Zwischenbojen (602) umfassen;
wobei die sekundären Seile (601) dazu konfiguriert sind, die schwimmenden Elemente (101) und die bestimmte schwimmende Struktur (102) in ihren relativen Positionen zueinander zu halten;
wobei die primären Seile (600) dazu konfiguriert sind, die sekundären Seile (601) zu stützen und die Solarmatte (100) an Verankerungsmitteln (603), die sich im Wesentlichen am Ufer des Sees befinden, zu befestigen; wobei die Zwischenbojen (602) dazu konfiguriert sind, die primären Seile (600) zu stützen und sie über der Wasseroberfläche zu halten;
wobei die gelenkigen Verbindungsmittel (103) ferner so konfiguriert sind, dass die schwimmenden Elemente (101) so auf dem Boden des Seegrunds abgelegt sind, dass sie sich seiner Topographie anpassen, wenn der See im Wesentlichen wasserleer ist;
wobei die Solarmatte (100) ferner durch die sekundären Seile (601) mit den Zwischenbojen (602) verbunden ist, wobei die Zwischenbojen (602) durch die primären Seile (600) mit den Verankerungsmitteln (603) verbunden sind.

2. Solarmatte (100) nach Anspruch 1, wobei die Tragstruktur (200) einen tragenden oberen Rahmen (201) umfasst, um die Photovoltaikplatte(n) mindestens 1,5 m über dem schwimmenden Element (101) zu halten, wobei der tragende obere Rahmen (201) dazu konfiguriert ist, jederzeit außerhalb des Seewassers zu bleiben.

3. Solarmatte (100) nach Anspruch 2, wobei die gelenkigen Verbindungsmittel (103) dazu konfiguriert sind, die schwimmenden Elemente (101) durch Befestigungen auf den oberen Rahmen zu verbinden, wodurch bei Gefrieren des Seewassers ein Einklemmen im Eis verhindert wird.

4. Solarmatte (100) nach Anspruch 2, wobei der obere Rahmen (201) eine Aluminiumstruktur umfasst.

5. Solarmatte (100) nach Anspruch 1, wobei sich die Zwischenbojen (602) im Randbereich der Solarmatte (100) befinden.

6. Solarmatte (100) nach Anspruch 1, wobei jedes der schwimmenden Elemente (101) eine Struktur umfasst, die aus mindestens einem der Materialien aus der Liste, die Stahl, Polyethylen und Aluminium umfasst, gebildet ist.

7. Solarmatte (100) nach Anspruch 1, wobei jedes der schwimmenden Elemente (101) eine hohle Struktur umfasst, wobei diese hohle Struktur leer ist.

8. Solarmatte (100) nach Anspruch 7, wobei die hohle Struktur mit einem Schaumstoff gefüllt ist, der dazu ausgelegt ist, zu verhindern, dass sich das schwimmende Element (101) bei einem Bruch in der hohlen Struktur mit Wasser füllt.

9. Solarmatte (100) nach einem der Ansprüche 1, 7 und 8, wobei jedes schwimmende Element (101) einen Schwimmer umfasst, der aus einem Stück oder mehreren Stücken gefertigt ist und eine achteckige Umfangsform (203) beschreibt.

10. Solarmatte (100) nach Anspruch 1, ferner umfassend Verankerungsmittel (603), die dazu konfiguriert sind, ein oder mehrere schwimmende(s) Element(e) (101) am Ufer des Sees zu befestigen.

11. Solarmatte (100) nach Anspruch 1, wobei zumindest ein Verbindungsmittel eine Kette aufweist, wobei die Kette eine bestimmte Masse aufweist.

12. Verfahren zur Installation einer Solarmatte (100) nach einem der Ansprüche 1 bis 11 auf einem Bergsee, umfassend:
Ablegen mindestens einer Bodenverankerungsbasis für die Solarmatte (100) an einer entsprechenden Stelle am Ufer des Sees, wenn der See auf einen Pegel von 2/3 des Maximalpegels gefüllt ist;
für jede Verankerungsbasis Montieren eines Seils, das mit einem seiner Enden an der Verankerungsbasis befestigt ist und dessen gegenüberliegendes Ende dazu vorgesehen ist, an einem schwimmenden Element (101) der Solarmatte (100) befestigt zu sein, wobei das Seil eine Länge aufweist, die dazu konfiguriert ist, einerseits zumindest ein Halten der Solarmatte (100) in einer ersten bestimmten Position zu gewährleisten, wenn ein Pegel des Sees minimal ist, und andererseits ein Halten der Solarmatte (100) in einer zweiten bestimmten Position zu gewährleisten, wenn der Pegel des Sees maximal ist, wobei das Seil dann gestreckt ist;
für jedes Seil und wenn der Pegel des Sees deutlich über dem Mindestpegel liegt, Befestigen eines schwimmenden Elements (101) an der Kette.

13. Installationsverfahren nach Anspruch 12, wobei der Boden des Sees vor dem Schritt des Ablegens trocken oder trockengelegt ist.

## Claims

1. Solar mat (100) for installation on a mountain lake, comprising
a plurality of floating elements (101), each of the floating elements (101) being configured to support loads while floating on the surface of the lake and to withstand forces originating at least from another of the floating elements (101) or from an environmental influence;
one or more photovoltaic panels mounted on each of the elements of the plurality of floating elements (101), by means respectively of a support structure (200) configured to separate the photovoltaic panels from the surface of the water by a predetermined height, selected to avoid contact with the water and so that any snow that might come into contact with a photovoltaic panel can easily fall off the panel for removal without accumulating in front of the panels;
an inverter and a transformer;
a defined floating structure (102) defined to support the inverter and the transformer;
articulated connection means (103) connecting the elements of the plurality of floating elements (101) and the defined floating structure (102) together in a matrix (104) in order to form the solar mat (100); and
anchoring means (603);
the articulated connection means comprising main cables (600), secondary cables (601) and intermediate buoys (602) ;
the secondary cables (601) being configured to hold the floating elements (101) and the defined floating structure (102) in their mutually-relative positions;
the main cables (600) being configured to support the secondary cables (601) and to fix the solar mat (100) to anchoring means (603) situated substantially on the edge of the lake;
the intermediate buoys (602) being configured to support the main cables (600) and to hold them above the surface of the water;
the articulated connection means (103) also being configured so that the floating elements (101) are placed on the ground at the bottom of the lake following the topography thereof when the lake is substantially empty of water;
the solar mat (100) also being connected to the intermediate buoys (602) by the secondary cables (601), the intermediate buoys (602) being connected to the anchoring means (603) by the main cables (600).

2. Solar mat according to Claim 1, wherein the support structure (200) comprises a load-bearing upper frame (201) to hold the photovoltaic panel(s) at least 1.5 m above the floating element (101), the load-bearing upper frame (201) being configured to remain out of the water of the lake at all times.

3. Solar mat (100) according to Claim 2, wherein the articulated connection means (103) are configured to connect the floating elements (101) by fastenings on the upper frames, thus making it possible to avoid any trapping in ice in the event that the lake water freezes.

4. Solar mat (100) according to Claim 2, wherein the upper frame (201) comprises an aluminium structure.

5. Solar mat (100) according to Claim 1, wherein the intermediate buoys (602) are situated in a peripheral zone of the solar mat (100).

6. Solar mat (100) according to Claim 1, wherein each of the floating elements (101) comprises a structure made from at least one of the materials in the list comprising steel, polyethylene, and aluminium.

7. Solar mat (100) according to Claim 1, wherein each of the floating elements (101) comprises a hollow structure, this hollow structure being empty.

8. Solar mat (100) according to Claim 7, wherein the hollow structure is filled with foam arranged to prevent the floating element (101) from filling with water in the event that the hollow structure is breached.

9. Solar mat (100) according to one of Claims 1, 7, and 8, wherein each floating element (101) comprises a float made in one piece or from a plurality of pieces, and describing a shape with an octagonal circumference (203).

10. Solar mat (100) according to Claim 1, also comprising anchoring means (603) configured to attach one or more floating elements (101) to the edge of the lake.

11. Solar mat (100) according to Claim 1, wherein at least one of the connection means includes a chain, the chain having a defined mass.

12. Method for installing a solar mat (100) on a mountain lake according to one of Claims 1 to 11, comprising:
placing at least one base for anchoring the solar mat (100) to the ground, in a location corresponding to the edge of the lake when the lake is filled to 2/3 of the maximum level;
fitting, for each anchoring base, a cable attached at one of its ends to the anchoring base and the opposite end of which is intended for attaching to a floating element (101) of the solar mat (100), the cable having a length configured to at least ensure that the solar mat (100) is held in a first defined position when the water level in the lake is at a minimum, and to ensure that the solar mat (100) is held in a second defined position when the water level in the lake is at a maximum, the cable then being extended;
for each cable, and when the water level in the lake is substantially higher than the minimum level, attaching a floating element (101) to the chain.

13. Installation method according to Claim 12, wherein, prior to the placement step, the ground of the lake is dried up or drained.
